# NEUE EUROPÄISCHE PATENTSCHRIFT

(11) **EP 0 888 091 B2**
(45) Veröffentlichungstag und Bekanntmachung des Hinweises auf die Entscheidung über den Einspruch: **02.02.2005**
(45) Hinweis auf die Patenterteilung: 20.03.2002
(21) Anmeldenummer: 97948774.1
(22) Anmeldetag: 21.10.1997
(51) Int. Cl.: A61C 1/06, A61C 1/18, H02K 7/14

(54) **DENTALES HANDSTÜCK**
DENTAL TOOL HOLDER
PIECE A MAIN DENTAIRE

(30) Priorität: 25.10.1996 DE 19644491
(43) Veröffentlichungstag der Anmeldung: 07.01.1999
(73) Patentinhaber: KALTENBACH & VOIGT GMBH & CO., 88400 Biberach (DE)
(72) Erfinder: KNORPP, Ernst, D-88299 Leutkirch (DE); THALER, Wolfgang, D-88299 Leutkirch (DE)
(74) Vertreter: Schmidt-Evers, Jürgen, Dipl.-Ing.
(86) Internationale Anmeldenummer: PCT/EP1997/005813
(87) Internationale Veröffentlichungsnummer: WO 1998/018401

(56) Entgegenhaltungen:
- EP-B- 0 012 871
- DE-A- 2 257 301
- DE-A- 2 756 011
- DE-A- 2 834 099
- DE-A- 3 237 197
- FR-A- 1 384 591
- FR-A- 2 514 250
- FR-A- 2 575 060
- FR-A- 2 720 263
- US-A- 4 937 485

## Beschreibung

Die vorliegende Erfindung betrifft ein dentales Handstück für zahnärztliche oder zahntechnische Zwecke gemäß dem Oberbegriff des Anspruches 1.

Insbesondere betrifft die Erfindung die Anordnung eines Antriebssystem in dem dentalen Handstück, wobei das Antriebssystem einen Antriebsmotor zum Antrieb eines dentalen Werkzeugs, welches mit dem dentalen Handstück betrieben werden kann, aufweist.

Dentale Handstücke umfassen allgemein einen Instrumentenabschnitt zur Aufnahme eines dentalen Werkzeuges, z.B. eines Turbinenbohrers, einen Antriebsmotor zum Antreiben des rotierenden dentalen Werkzeuges und einen Schlauchabschnitt mit einem Medien-Zufuhrschlauch zum Zuführen von bestimmten Versorgungsmedien für den Betrieb des dentalen Werkzeuges, wie z.B. Strom, Spray- oder Kühlluft, Spraywasser etc.. Dabei wird hinsichtlich des Aufbaus des dentalen Handstückes im wesentlichen zwischen zwei unterschiedüchen Aufbauarten unterschieden.

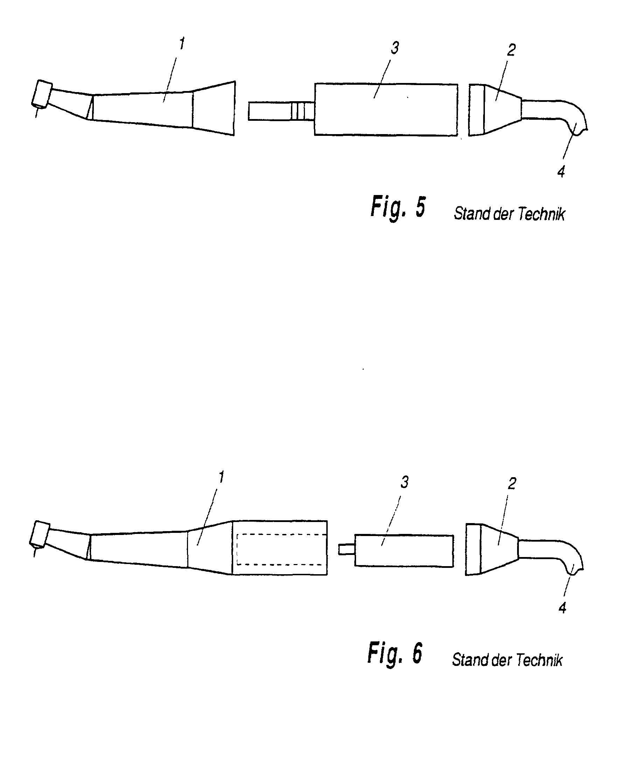

Wie in Fig. 5 gezeigt, können der Instrumentenabschnitt 1, der Antriebsmotor 3 und der Schlauchabschnitt 2 mit dem Medien-Zufuhrschlauch 4 als Einzelkomponenten vorhanden sein, die durch Aufstecken direkt hintereinander gekoppelt werden. Dieser Aufbau weist somit drei Koppelstellen zwischen dem instrumentenabschnitt 1 und dem Schlauchabschnitt 2 sowie jeweils zwischen dem Antriebsmotor 3 und den beiden Abschnitten 1 und 2 auf. Ein derartiger Aufbau ist beispielsweise aus der DE 28 34 099 C2 oder der EP 0012871 B1 bekannt.

Die zweite Aufbauart des dentalen Handstükkes ist in Fig. 6 dargestellt. Bei dem Antriebsmotor 3 handelt es dabei um eine Motorpatrone, die in einen von dem Instrumentenabschnitt 1 und dem Schlauchabschnitt 2 gebildeten Hohlraum gehalten wird. Der Instrumentenabschnitt besitzt zu diesem Zweck ein den Antriebsmotor 3 überlappendes Gehäuse mit integrierten Versorgungsleitungen für die Aufnahme der von dem Medien-Zufuhrschlauch zugeführten Versorgungsmedien, wobei das Gehäuse und die Versorgungsleitungen des Instrumentenabschnittes 1 bis zu dem Schlauchabschnitt 2 geführt sind.

Die bekannten Aufbauarten sind jedoch in vielfacher Hinsicht problematisch. So ist durch die bauartbedingte große Baulänge und das relativ hohe Gewicht des dentalen Handstückes die Handhabung des Handstückes erschwert, da der Schwerpunkt des Handstükkes zu der Schlauchseite hin verlagert ist. Gerade für zahnärztliche Arbeiten ist jedoch eine feinfühlige und leichte Handhabung des dentalen Handstückes erforderlich. Die vielen Koppel- bzw. Trennstellen innerhalb des dentalen Handstückes sind bezüglich der Hygieneanforderungen kritisch. Zudem erschweren diese Trennstellen eine sichere Durchführung der Versorgungsmedien, da leicht undichte Stellen auftreten können. Des weiteren ist die zum Arbeiten im Mund eines Patienten erforderliche Drehbarkeit des Handstückes erschwert, da die Drehung stets über die Koppelstellen des Antriebsmotors erfolgen muß. Da die Motorwelle des Antriebsmotors notwendigerweise mechanisch mit einer in dem Instrumentenabschnitt vorhandenen Welle zum Betreiben des dentalen Werkzeuges gekoppelt sein muß, wird dadurch die maximale Drehzahl begrenzt und das Handstück neigt zu Schwingungen sowie zur Geräuschbildung. Weiterhin können bei den bekannten Aufbauarten die erforderlichen unterschiedlichen Drehzahl- und Leistungsbereiche, d.h. kleine Drehzahlbereiche mit hohen Drehmomentanforderungen und hohe Drehzahlbereiche mit niedrigen Drehmomentanforderungen, nurdadurch erzieltwerden, daß eine Vielzahl von unterschiedlichen und austauschbaren Instrumentenabschnitten mit den entsprechenden Getriebeabstufungen verwendet werden, wodurch jedoch die Kosten des Gesamtsystems erheblich steigen. Schließlich weist bei den bekannten Aufbauarten jedes Antriebsteil ein eigenes Lagersystem auf. Dadurch erhöht sich jedoch entsprechend die Verschleißanfälligkeit des dentalen Handstückes und es kann durch Lagerreibung zu einer zusätzlichen Erwärmung der Bestandteile des Handstückes kommen.

Aus der DE 35 27 796 A1 bzw. der FR 2 575 060 A1 ist ein zahnärztliches Handstück bekannt, welches zur Verbesserung der Reinigungsfähigkeit zweiteilig ausgestaltet ist. Dabei sind in einem hinteren Teil des Handstücks die statischen Teile eines Elektromotors angeordnet, während hingegen in dem vorderen Teil des Handstücks eine Motorwelle gelagert ist. Der hintere und vordere Teil des Handstücks sind zusammensetzbar um das gesamte Handstück zu bilden. Um hierbei die für den Motorbetrieb erforderliche magnetische Kopplung zwischen den statischen Teilen des Motors und der Antriebswelle zu erzielen, umschließen die Statorwicklungen des Motors jeweils Polschuhe, welche gegenüber den Wicklungen zur Vorderseite hin verlängert sind und im zusammengesetzten Zustand des Handstücks seitlich neben der Welle angeordnet sind.

Durch die Trennung des Handstücks in einen vorderen Bereich mit der Motorwelle und einem hinteren Bereich mit den statischen Motorteilen wird die Reinigungsfähigkeit zwar verbessert, die aus der DE 35 27 796 A1 bekannte Konstruktion erfordert allerdings eine verhältnismäßig große Baulänge, wodurch die Handhabbarkeit des Handstücks beeinträchtigt wird.

Der vorliegenden Erfindung liegt daher die Aufgabe zugrunde, eine neuartige Lösung anzugeben, die es gestattet, das Handstück in einer kürzeren Baulänge zu realisieren und damit die Handhabbarkeit zu verbessern.

Diese Aufgabe wird erfindungsgemäß durch ein dentales Handstück gemäß Anspruch 1 gelöst.

Erfindungsgemäß wird der Antriebsmotor in den Instrumentenabschnitt des dentalen Handstücks integriert, was dadurch erreicht wird, dass im getrennten Zustand des ersten und zweiten Abschnittes der rotierende Bereich des Antriebsmotors in dem ersten Abschnitt und der statische Bereich des Antriebsmotors in dem zweiten Abschnitt angeordnet ist oder umgekehrt, wobei der rotierende Bereich und der statische Bereich des Antriebsmotors derart ausgebildet sind, daß durch Zusammenfügen des ersten und zweiten Abschnittes der statische Bereich des Antriebsmotors mit der Statorwicklung über den rotierenden Bereich des Antriebsmotors geschoben wird.

Grundsätzlich ist auch die Umkehrung möglich, d.h., daß der Stator in dem Instrumentenabschnitt und der Rotor im Schlauchabschnitt angeordnet ist. Diese Altemative kann vorteilhaft bei einem Kollektor-Motor Anwendung finden. Nachfolgend werden Weiterbildungen der Erfindung der Einfachheit halbernuranhand der erstgenannten Möglichkeit beschrieben.

Der erfindungsgemäße Aufbau des dentalen Handstückes ist in vielfacher Hinsicht vorteilhaft.

Durch die Anordnung des Stators in dem Schlauchabschnitt sind die eigentlichen kostenintensiven Teile des Antriebsmotors in dem Schlauchabschnitt integriert und können für die unterschiedlichsten Ausführungen des Instrumentenabschnitts mit unterschiedlichen Über- oder Untersetzungsverhältnissen gleichermaßen verwendet werden, so daß diese Teile lediglich einmal angeschafft werden müssen. Aufgrund des erfindungsgemäßen Aufbaus ist nurmehr eine Trennstelle zwischen dem Instrumentenabschnitt und dem Schlauchabschnitt vorhanden, so daß der Kopplungsund Dichtungsaufwand für die Versorgungsleitungen verbessert und die Reinigung des Handstückes erleichtert ist. Zudem sind die Statorteile, die beim Sterilisieren des Handstückes kritisch sind, nicht mehr im Instrumentenabschnitt, sondern im Schlauchabschnitt angeordnet, wobei jedoch der Schlauchabschnitt nicht sterilisiert werden muß. Insgesamt wird somit die Hygiene deutlich verbessert. Schließlich weist das erfindungsgemäße dentale Handstück aufgrund der nurmehr vorhandenen einen Trennstelle eine erheblich verbesserte Drehbarkeit sowie eine reduzierte Gesamtlänge und ein reduziertes Gesamtgewicht auf.

Weitere Vorteile der Erfindung ergeben sich durch den festen Sitz des Rotors des Antriebsmotors auf der ersten Getriebestufe des Instrumentenabschnittes, da im Vergleich zu einem separaten Motor zwei Kugellager eingespart werden können. Da eine Ankopplung des Rotors des Antriebsmotors an die erste Getriebestufe des Instrumentenabschnittes nicht mehr erforderlich ist, werden die Kopplungsgeräusche verringert und die Herstellungskosten reduziert. Durch den Wegfall dieser Ankopplung und die Einsparung von Lagerstellen kann insgesamt eine deutlich höhere Antriebsdrehzahl realisiert werden, wodurch wiederum kleinere Getriebeübersetzungen zum Erzielen derselben Werkzeugdrehzahl ermöglicht werden, was die Betriebssicherheit erhöht. Durch die Erweiterung des Drehzahlbereiches kann ebenso die zuvor erforderliche große Anzahl von verschiedenen Instrumentengetrieben reduziert werden. Da erfindungsgemäß der Rotor des Antriebsmotors innerhalb des Instrumentenabschnittes angeordnet ist, weist das dentale Handstück eine geringer Gesamtlänge und ein verringertes Gewicht sowie folglich eine verbesserte Handhabbarkeit auf.

Gemäß vorteilhafter Ausführungen der Erfindung können der Rotor und/oder der Stator aus dem Instrumenten- bzw. Schlauchabschnitt des dentalen Handstückes entnommen und gegen einen anderen Rotor mit beispielsweise einem anderen Rotormagnet bzw. einem anderem Staor mit einer anderen Statorwicklung ausgewechselt werden, so daß bei Verwendung des gleichen Instrumentes unterschiedliche Drehzahl- und Leistungsbereiche erzielt werden können, ohne daß der übrige Aufbau des dentalen Handstückes verändert werden müßte. Ebenso ist denkbar, nur den Magnet des Rotors gegen einen anderen Magnet unterschiedlicher Permeabilität auszutauschen.

Schließlich kann erfindungsgemäß auch die Statorwicklung des Antriebsmotors zur Erzielung unterschiedlicher Drehzahlen hinsichtlich der der Statorwicklung zugeführten elektrischen Leistung ansteuerbar ausgestaltet sein. Zu diesem Zweck kann die Statorwicklung auch mehrere parallelgeschaltete Einzelspulen aufweisen, die getrennt ein- und ausschaltbar sind, so daß die Drehzahl des Antriebsmotors durch wahlweises Einschalten der einzelnen Statorspulen gesteuert werden kann.

Weitere vorteilhafte Ausführungen der Erfindung sind in den Unteransprüchen beschrieben.

Die Erfindung wird nachfolgend unter Bezugnahme auf die Zeichnung anhand bevorzugter Ausführungsbeispiele beschrieben.
Fig. 1 zeigt ein erstes Ausführungsbeispiel der vorliegenden Erfindung, wobei der Instrumentenabschnitt von dem Schlauchabschnitt getrennt ist,
Fig. 2 zeigt ein zweites Ausführungsbeispiel der vorliegenden Erfindung, wobei der Instrumentenabschnitt von dem Schlauchabschnitt getrennt ist,
Fig. 3 zeigt ein zweites Ausführungsbeispiel der vorliegenden Erfindung, wobei der Instrumentenabschnitt von dem Schlauchabschnitt getrennt ist,
Fig. 4 zeigt das erste Ausführungsbeispiel der vorliegenden Erfindung im zusammengesetzten Zustand,
Fig. 5 zeigt ein bekanntes dentales Handstück, und
Fig. 6 zeigt ein weiteres bekanntes dentales Handstück.

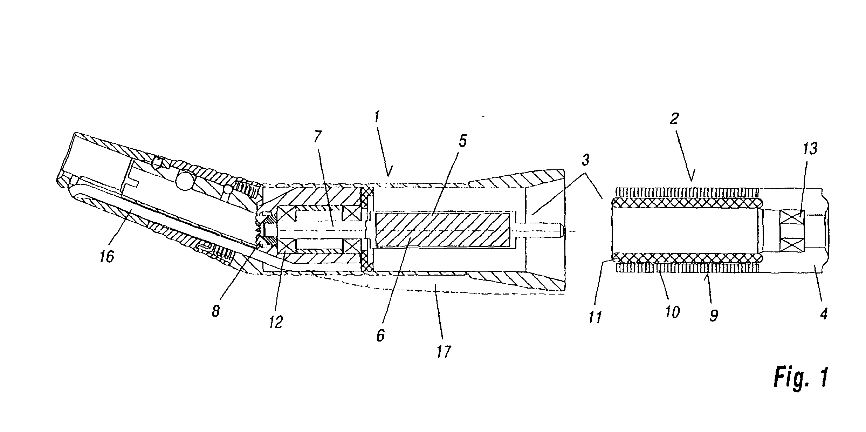

Fig. 1 zeigt prinzipiell den Aufbau des erfindungsgemäßen dentalen Handstücks. Grundsätzlich umfaßt das dentale Handstück nach der vorliegenden Erfindung zwei Gehäuseabschnitte, nämlich den Instrumentenabschnitt 1, welcher zur Aufnahme (beispielsweise durch Aufstecken) eines rotierenden dentalen Werkzeuges (z.B. eines Turbinenbohrers) dient, und den Schlauchabschnitt 2 mit einem Ansatz für einen Medien-Zufuhrschlauch 4, der entweder an dem Schlauchabschnitt direkt befestigt oder daran ankoppelbar (beispielsweise anschraubbar) ist. Die Medien-Zufuhrleitung 4 dient zum Zuführen von verschiedenen Versorgungsmedien zum Betrieben des dentalen Werkzeuges, wie z.B. Strom (für eine Beleuchtungseinrichtung und den elektrischen Antriebsmotor 3) Kühlluft, Sprayluft oder Spraywasser.

Der Antriebsmotor 3, der einen rotierenden Bereich (Rotor) 5 und einen statischen Bereich (Stator 2)) umfaßt, dient zum Antreiben des dentalen Werkzeuges. Der Antriebsmotor 3 ist vorzugsweise kollektorlos, d.h. beispielsweise ein Asynchronmotor oder ein bürstenloser Gleichstrommotor. Der Rotor 5 umfaßt einen Permanentmagnet 6 und eine Motorwelle 7. Der Stator umfaßt ein Stator-Blechpaket 10 und eine Statorwicklung 11. Erfindungsgemäß sitzt die Motorwelle 7 unmittelbar auf der ersten Getriebestufe 8 des Instrumentenabschnittes, die zur Übertragung des Drehmomentes der Motorwelle 7 auf das zu betreibende dentale Werkzeug dient. Der Rotor 5 ist freitragend in dem Instrumentenabschnitt 1 integriert. Der Stator 9 ist vom Rotor 5 getrennt und in dem Schlauchabschnitt 2 angeordnet. Sowohl Rotor 5 als auch Stator 9 können in dem jeweiligen Abschnitt 1 bzw. 2 entweder fest oder auswechselbar angeordnet bzw. integriert sein. Insbesondere kann der Stator 9 über Steckkontake in dem Schlauchabschnitt 2 befestigt sein. Sind Rotor 5 und/oder Stator 9 entnehmbar in dem Instrumentenabschnitt 1 bzw. Schlauchabschnitt 2 angeordnet, kann der Rotor 5 bzw. der Stator 9 vorteilhafterweise gegen einen anderen Rotor mit beispielsweise einem anderen Rotormagnet bzw. einen anderen Stator mit einer anderen Statorwicklung ausgewechselt werden, so daß bei Verwendung des gleichen Instrumentes unterschiedliche Drehzahl- und Leistungsbereiche erzeilt werden können, ohne daß der Aufbau des dentalen Handstückes ansonsten verändert werden müßte. Ebenso kann der Rotor 5 derart ausgebildet sein, daß nur der Rotormagnet 6 gegen einen Rotormagnet anderer Permeabilität austauschbar ist.

Um weiterhin mit ein und demselben Handstück bzw. demselben Instrumenten- und Schlauchabschnitt unterschiedliche Drehzahlbereiche erzielen zu können, kann die Zufuhr der elektrischen Leistung zu der Statorwicklung 11 des Stators 9 steuerbar sein. Ebenso kann die Statorwicklung 11 in mehrere Einzelspulen aufgeteilt sein, die getrennt und unabhängig voneinander aktiviert werden können, so daß die der Statorwicklung 11 zugeführte elektrische Leistung durch Ein- und Ausschalten bestimmter Einzelspulen gesteuert werden kann. Auf diese Weise kann ein und dasselbe dentale Handstück auf unterschiedliche Drehzahlbereiche umgeschaltet werden.

Der Rotor 5 ist nach Zusammensetzen der Abschnitte 1 und 2 mit seinem hinteren Ende auch in dem Schlauchabschnitt 2 gelagert und gestützt. Gemäß Fig. 1 ist zu diesem Zweck in dem Schlauchabschnitt 2 ein Kugellager 13 vorgesehen. Durch Zusammenschieben der beiden Abschnitte 1 und 2 wird einerseits der Stator 9 über den Rotor 5 und andererseits das hintere Ende des Rotors 5 in das Kugellager 13 geschoben. Um den Rotor 5 auch zusätzlich abzustützen, wenn die Abschnitte 1 und 2 nicht zusammengesetzt sind und daher der Rotor 5 nicht in dem Schlauchabschnitt 2 abgestützt ist, können optional zusätzliche Kugellager 12 in dem Instrumentenabschnitt vorgesehen sein, die die Motorwelle 7 stützen.

Der Instrumentenabschnitt 1 weist mehrere Versorgungsleitungen 16 auf, um die von der Medien-Zufuhrleitung 4 zugeführten Versorgungsmedien dem zu betreibenden dentalen Werkzeug zuzuführen. Der Instrumentenabschnitt 1 besitzt an seiner unteren Seite eine asymmetrisch ausgestaltete Gehäuseform als zusätzlichen Freiraum für die Versorgungsleitungen 16. Die in dem Instrumentenabschnitt 1 integrierten Versorgungsleitungen 16 verlaufen im zusammengesetzten Zustand bis zu dem Schlauchabschnitt 2, so daß durch Zusammenschieben der Abschnitte 1 und 2 die Versorgungsleitungen 16 des Instrumentenabschnittes 1 direkt mit der Medien-Zufuhrleitung 4 verbunden werden. Alternativ kann auch der Schlauchabschnitt 2 entsprechend ausgebildete (nicht gezeigte) Versorgungsleitungen aufweisen, die einerseits an der Medien-Zufuhrleitung 4 angeschlossen sind und andererseits durch Zusammenschieben der Abschnitte 1 und 2 mit den entsprechenden Versorgungsleitungen 16 des Instrumentenabschnittes 1 verbunden werden, um eine direkte und sichere Übertragung der Versorgungsmedien zu gewährleisten.

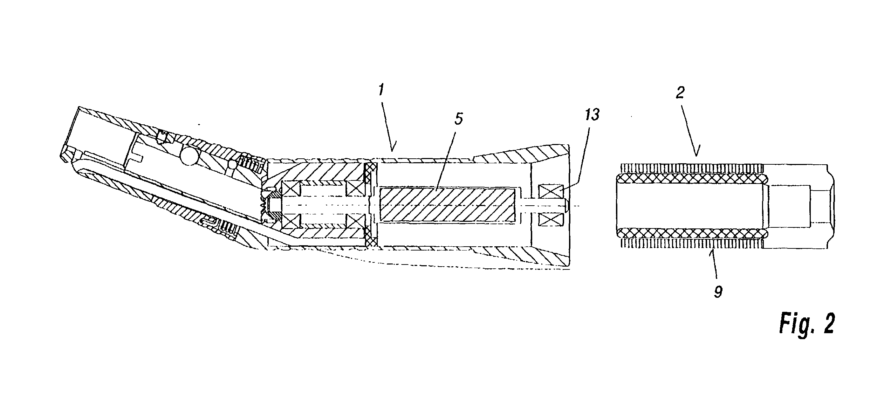

Fig. 2 zeigt ein zweites Ausführungsbeispiel des erfindungsgemäßen dentalen Handstücks, wobei sich das zweite Ausführungsbeispiel von dem in Fig. 1 gezeigten Ausführungsbeispiel nur darin unterscheidet, daß das Kugellager 13 zur Abstützung und Lagerung des hinteren Teils des Rotors 5 in dem Schlauchabschnitt 2 an dem Rotor 5 befestigt ist.

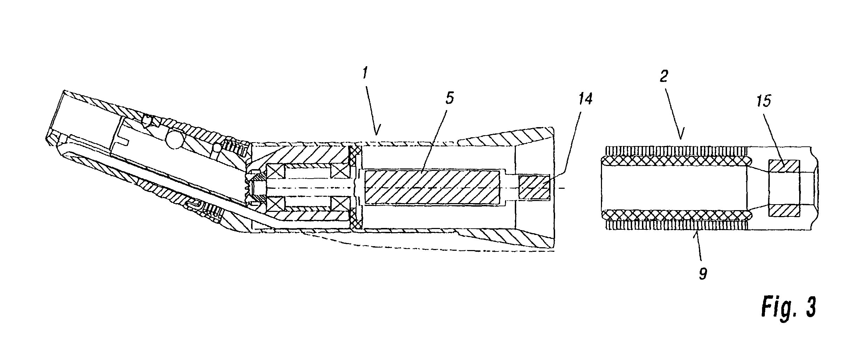

Vorteilhafterweise kann auch als Lager für das hintere Ende des Rotors 5 in dem Schlauchabschnitt 2 ein Luft- oder Gleitlager verwendet werden. Insbesondere kann ein Magnetlager verwendet werden, welches in Fig. 3 dargestellt ist. Der statische Teil 15 des Magnetlagers ist mit dem Schlauchabschnitt 2 und der rotierende Teil 14 des Magnetlagers ist mit dem Rotor 5 des Antriebsmotors verbunden.

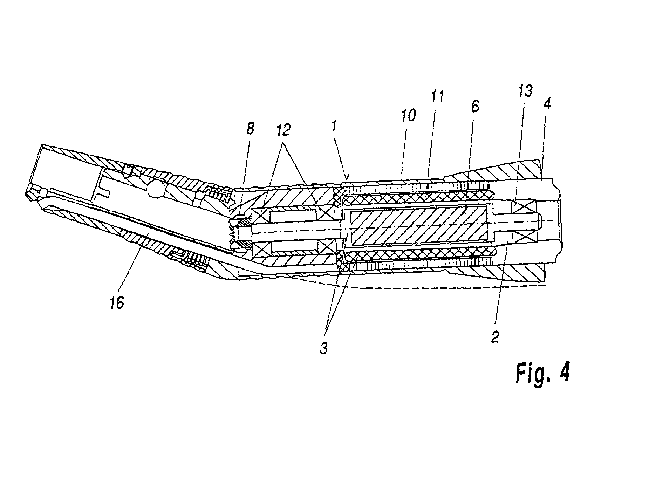

Fig. 4 zeigt das erfindungsgemäße dentale Handstück im zusammengesetzten Zustand. Es ist ersichtlich, daß erfindungsgemäß durch Zusammenstekken des Instrumentenabschnittes 1 und des Schlauchabschnitte 2 ein kompaktes Handstück mit einem im Prinzip integrierten Antriebsmotor 3 erhalten wird.

## Patentansprüche

1. Dentales Handstück,
mit einem ersten Abschnitt (1) zur Aufnahme eines dentalen Werkzeuges,
mit einem zweiten Abschnitt (2), der mit dem ersten Abschnitt (1) lösbar koppelbar ist und an den eine Medien-Zufuhrleitung (4) zur Zufuhr bestimmter Versorgungsmedien für den Betrieb des dentalen Werkzeuges anschließbar ist, und
mit einem Antriebsmotor (3) zum Antrieb des dentalen Werkzeuges, wobei der Antriebsmotor (3) einen rotierenden Bereich (5) und einen statischen Bereich (9) mit einer Statorwicklung (11) umfaßt und nach Zusammenfügen des ersten und zweiten Abschnittes (1; 2) in einem durch den ersten Abschnitt (1) und den zweiten Abschnitt (2) gebildeten Hohlraum angeordnet ist,
wobei im getrennten Zustand des ersten und zweiten Abschnittes (1; 2) der rotierende Bereich (5) des Antriebsmotors (3) in dem ersten Abschnitt (1) und der statische Bereich (9) des Antriebsmotors (3) in dem zweiten Abschnitt (2) angeordnet ist oder umgekehrt,
**dadurch gekennzeichnet,**
da**ß** der rotierende Bereich (5) und der statische Bereich (9) des Antriebsmotors (3) derart ausgebildet sind, daß durch Zusammenfügen des ersten und zweiten Abschnittes (1; 2) der statische Bereich (9) des Antriebsmotors (3) mit des Statorwicklung (11) über den rotierenden Bereich (5) des Antriebsmotors (3) geschoben wird.

2. Dentales Handstück nach Anspruch 1,
**dadurch gekennzeichnet,**
da**ß** der Antriebsmotor (3) ein kollektorloser Motor ist.

3. Dentales Handstück nach Anspruch 2,
**dadurch gekennzeichnet,**
da**ß** der Antriebsmotor (3) ein Asynchronmotor oder ein bürstenloser Gleichstrommotor ist.

4. Dentales Handstück nach einem der vorhergehenden Ansprüche,
**dadurch gekennzeichnet,**
da**ß** der rotierende Bereich (5) des Antriebsmotors (3) in dem ersten Abschnitt (1) auswechselbar angeordnet ist.

5. Dentales Handstück nach Anspruch 4,
**dadurch gekennzeichnet,**
da**ß** der rotierende Bereich (5) des Antriebsmotors (3) einen Permanentmagnet (6) umfaßt, der auswechselbar ist.

6. Dentales Handstück nach einem der vorhergehenden Ansprüche,
**dadurch gekennzeichnet,**
da**ß** der rotierende Bereich (5) des Antriebsmotors (3) an einem dem ersten Abschnitt (1) zugewandten Ende eine rotierende Motorwelle (7) umfaßt, die in dem ersten Abschnitt (1) freitragend angeordnet ist.

7. Dentales Handstück nach einem der Ansprüche 1-5,
**dadurch gekennzeichnet,**
da**ß** der rotierende Bereich (5) des Antriebsmotors (3) an seinem dem ersten Abschnitt (1) zugewandten Ende eine rotierende Motorwelle (7) umfaßt, die in dem ersten Abschnitt (1) durch ein Lager (12), insbesondere durch ein Kugellager, abgestützt ist.

8. Dentales Handstück nach einem der vorhergehenden Ansprüche,
**dadurch gekennzeichnet,**
da**ß** das dem zweiten Abschnitt (2) zugewandte Ende des rotierenden Bereiches (5) des Antriebsmotors (3) im zusammengesetzten Zustand des ersten und zweiten Abschnittes (1; 2) in dem zweiten Abschnitt (2) abgestützt ist.

9. Dentales Handstück nach Anspruch 8,
**dadurch gekennzeichnet,**
da**ß** das dem zweiten Abschnitt (2) zugewandte Ende des rotierenden Bereiches (5) des Antriebsmotors (3) durch ein Rotorlager (13) abgestützt ist.

10. Dentales Handstück nach Anspruch 9,
**dadurch gekennzeichnet,**
da**ß** das Rotorlager (13) an dem rotierenden Bereich (5) des Antriebsmotors (3) befestigt ist.

11. Dentales Handstück nach Anspruch 9,
**dadurch gekennzeichnet,**
da**ß** das Rotorlager (13) in dem zweiten Abschnitt (2) angeordnet ist.

12. Dentales Handstück nach einem der Ansprüche 9-11,
**dadurch gekennzeichnet,**
da**ß** das Rotorlager (13) ein Kugellager ist.

13. Dentales Handstück nach einem der Ansprüche 9-11,
**dadurch gekennzeichnet,**
da**ß** das Rotorlager (13) ein Luft- oder Gleitlager ist.

14. Dentales Handstück nach Anspruch 9,
**dadurch gekennzeichnet,**
da**ß** das Rotorlager (13) ein Magnetlager ist, dessen rotierender Teil (14) an dem rotierenden Bereich (5) des Antriebsmotors (3) und dessen statischer Teil (15) in dem zweiten Abschnitt (2) befestigt ist.

15. Dentales Handstück nach einem der vorhergehenden Ansprüche,
**dadurch gekennzeichnet,**
da**ß** der statische Bereich (9) des Antriebsmotors (3) in dem zweiten Abschnitt (2) auswechselbar angeordnet ist.

16. Dentales Handstück nach einem der vorhergehenden Anspüche,
**dadurch gekennzeichnet,**
da**ß** der erste Abschnitt (1) Versorgungsleitungen (16) für die Versorgungsmedien aufweist, die durch Zusammensetzen des ersten und zweiten Abschnittes (1, 2) direkt mit der Medien-Zufuhrleitung verbunden werden, so daß die Versorgungsmedien von der an den zweiten Abschnitt (2) angeschlossenen Medien-Zufuhrleitung (4) unmittelbar dem ersten Abschnitt (1) zuführbar sind.

17. Dentales Handstück nach einem der Ansprüche 1-15,
**dadurch gekennzeichnet,**
da**ß** der erste und zweite Abschnitt (1; 2) entsprechend ausgebildete Versorgungsleitungen (16) für die Versorgungsmedien aufweisen, die durch Zusammensetzen des ersten und zweiten Abschnittes (1; 2) miteinander verbunden werden, wobei die Versorgungsleitungen des zweiten Abschnittes (2) zudem mit der Medien-Zufuhrleitung (4) verbunden sind, so daß die Versorgungsmedien von der an den zweiten Abschnitt (2) angeschlossenen Medien-Zufuhrleitung (4) über die Versorgungsleitungen (16) des zweiten und ersten Abschnittes (1) dem dentalen Werkzeug zuführbar sind.

18. Dentales Handstück nach Anspruch 16 oder 17,
**dadurch gekennzeichnet,**
da**ß** die Versorgungsleitungen (16) für die Versorgungsmedien Strom und/oder Sprayluft und/oder Spraywasser und/oder Kühlluft vorgesehen sind.

19. Dentales Handstück nach einem der vorhergehenden Ansprüche,
**dadurch gekennzeichnet,**
da**ß** die Medien-Zufuhrleitung (4) direkt an dem zweiten Abschnitt (2) befestigt ist.

20. Dentales Handstück nach einem der vorhergehenden Ansprüche,
**dadurch gekennzeichnet,**
**daß** der statische Bereich (9) des Antriebsmotors (3) zur Erzielung unterschiedlicher Drehzahlen des rotierenden Bereichs (5) des Antriebsmotors (3) ansteuerbar ist.

21. Dentales Handstück nach Anspruch 20,
**dadurch gekennzeichnet,**
da**ß** der statische Bereich (9) des Antriebsmotors (3) mehrere getrennt voneinander schaltbare Wicklungen (11) aufweist.

22. Dentales Handstück nach einem der vorhergehenden Ansprüche,
**dadurch gekennzeichnet,**
da**ß** der rotierende Bereich (5) des Antriebsmotors (3) direkt mit einer Getriebestufe des Instrumentenabschnittes (1) verbunden ist, wobei die Getriebestufe zur Übertragung des Drehmoments des rotierenden Bereiches (5) auf das dentale Werkzeug dient.

## Claims

1. Dental handpiece,
having a first section (1) for receiving a dental tool,
having a second section (2), with which the first section (1) can be releasably coupled and to which there can be connected a media delivery line (4) for the delivery of particular supply media for the operation of the dental tool, and
having a drive motor (3) for driving the dental tool, the drive motor (3) including a rotating region (5) and a static region (9) with a stator winding (11) and, after joining together of the first and second sections (1; 2), being arranged in a hollow space formed by means of the first section (1) and the second section (2),
wherein, in the separated condition of the first and second sections (1; 2), the rotating region (5) of the drive motor (3) is arranged in the first section (1) and the static region (9) of the drive motor (3) is arranged in the second section (2), or vice versa.
**characterised in that**,
the rotating region (5) and the static region (9) of the drive motor (3) are so configured that by means of joining together of the first and second sections (1; 2) the static region (9) of the drive motor (3) with the stator winding (11) is pushed over the rotating region (5) of the drive motor (3).

2. Dental handpiece according to claim 1,
**characterised in that**,
the drive motor (3) is a collectorless motor.

3. Dental handpiece according to claim 2,
**characterised in that**,
the drive motor (3) is an asynchronous motor or a brushless d.c. motor.

4. Dental handpiece according to any preceding claim,
**characterised in that**,
the rotating region (5) of the drive motor (3) is exchangeably arranged in the first section (1).

5. Dental handpiece according to claim 4,
**characterised in that**,
the rotating region (5) of the drive motor (3) includes a permanent magnet (6) that is exchangeable.

6. Dental handpiece according to any preceding claim,
**characterised in that**,
the rotating region (5) of the drive motor (3) includes a rotating motor shaft (7) at an end towards the first section (1), which motor shaft is arranged unsupported in the first section (1).

7. Dental handpiece according to any of claims 1 to 5,
**characterised in that**,
the rotating region (5) of the drive motor (3) includes a rotating motor shaft (7) at its end towards the first section (1), which shaft is supported in the first section (1) by means of a bearing (12), in particular by means of a ball bearing.

8. Dental handpiece according to any preceding claim,
**characterised in that**,
the end of the rotating region (5) of the drive motor (3) towards the second section (3) is, in the joined together condition of the first and second sections (1; 2), supported in the second section (2).

9. Dental handpiece according to claim 8,
**characterised in that**,
the end of the rotating region (5) of the drive motor (3) towards the second section (2) is supported by means of a rotor bearing (13).

10. Dental handpiece according to claim 9,
**characterised in that**,
the rotor bearing (13) is attached to the rotating region (5) of the drive motor (3).

11. Dental handpiece according to claim 9,
**characterised in that**,
the rotor bearing (13) is arranged in the second section (2) .

12. Dental handpiece according to any of claims 9 to 11,
**characterised in that**,
the rotor bearing (13) is a ball bearing.

13. Dental handpiece according to any of claims 9 to 11,
**characterised in that**,
the rotor bearing (13) is an air or sliding bearing.

14. Dental handpiece according to claim 9,
**characterised in that**,
the rotor bearing (13) is a magnetic bearing, the rotating part (14) of which is attached to the rotating region (5) of the drive motor (13) and the static part (15) of which is attached in the second section (2).

15. Dental handpiece according to any preceding claim,
**characterised in that**,
the static section (9) of the drive motor (3) is exchangeably arranged in the second section (2).

16. Dental handpiece according to any preceding claim,
**characterised in that**,
the first section (2) has supply lines (16) for the supply media which, through joining together of the first and sections (1, 2), are directly connected with the media delivery line, so that the supply media can be directly delivered to the first section (1) from the media delivery line (4) connected to the second section (2).

17. Dental handpiece according to any of claims 1 to 15,
**characterised in that**,
the first and second sections (1; 2) have appropriately formed supply lines (16) for the supply media, which are connected with one another by means of joining together of the first and second section (1; 2), the supply lines of the second section (2) being further connected with the media delivery line (4), so that the supply media are deliverable to the dental tool from the media delivery line (4) connected to the second section (2) via the supply lines (16) of the second and first sections (1).

18. Dental handpiece according to claim 16 or 17,
**characterised in that**,
the supply lines (16) are provided for the supply media current and/or spray air and/or spray water and/or cooling air.

19. Dental handpiece according to any preceding claim,
**characterised in that**,
the media delivery line (4) is directly attached to the second section (2).

20. Dental handpiece according to any preceding claim,
**characterised in that**,
the static region (9) of the drive motor (3) is controllable for attaining different rates of rotation of the rotating region (5) of the drive motor (3).

21. Dental handpiece according to claim 20,
**characterised in that**,
the static region (9) of the drive motor (3) has a plurality of windings (11) which are switchable separately from one another.

22. Dental handpiece according to any preceding claim,
**characterised in that**,
the rotating region (5) of the drive motor (3) is directly connected with a transmission stage of the instrument section (1), the transmission stage serving for the transmission of the torque of the rotating region (5) to the dental tool.

## Revendications

1. Pièce à main dentaire,
comportant un premier tronçon (1) destiné à recevoir un outil dentaire, un deuxième tronçon (2) qui peut être couplé de manière détachable au premier tronçon (1) et auquel on peut raccorder un conduit d'amenée de médias (4) pour amener des médias d'alimentation déterminés pour le fonctionnement de l'outil dentaire, et
comportant un moteur d'entraînement (3) destiné à entraîner l'outil dentaire, le moteur d'entraînement (3) comprenant une région rotative (5) et une région statique (9) avec un enroulement de stator (11) et qui, après avoir assemblé le premier tronçon (1) au deuxième tronçon (2), est agencé dans une cavité formée par le premier tronçon (1) et par le deuxième tronçon (2),
dans laquelle à l'état séparé du premier et du deuxième tronçon (1 ;2) de la région rotative (5) du moteur d'entraînement (3) est agencée dans le premier tronçon (1) et la région statique (9) du moteur d'entraînement (3) est agencée dans le deuxième tronçon (2), ou inversement,
**caractérisée en ce que**,
la région rotative (5) et la région statique (9) du moteur d'entraînement (3) sont configurés de telle sorte que par l'assemblage du premier et du deuxième tronçon (1;2), la région statique (9) du moteur d'entraînement (3) avec l'enroulement de stator (11) est enfilée au-dessus de la région rotative (5) du moteur d'entraînement (3).

2. Pièce à main dentaire selon l'une ou l'autre des revendication 1,
**caractérisée en ce que**
le moteur d'entraînement (3) est un moteur sans collecteur.

3. Pièce à main dentaire selon la revendication 2,
**caractérisée en ce que**
le moteur d'entraînement (3) est un moteur asynchrone ou un moteur à courant continu sans balais.

4. Pièce à main dentaire selon l'une quelconque des revendications précédentes,
**caractérisée en ce que**
la région rotative (5) du moteur d'entraînement (3) est agencée dans le premier tronçon (1) de manière interchangeable.

5. Pièce à main dentaire selon la revendication 4,
**caractérisée en ce que**
la région rotative (5) du moteur d'entraînement (3) comprend un aimant permanent (6) interchangeable.

6. Pièce à main dentaire selon l'une quelconque des revendications précédentes,
**caractérisée en ce que**
la région rotative (5) du moteur d'entraînement (3) comprend, sur une extrémité tournée vers le premier tronçon (1), un arbre de moteur rotatif (7) qui est agencé en portée libre dans le premier tronçon (1).

7. Pièce à main dentaire selon l'une quelconque des revendications 1 à 5,
**caractérisée en ce que**
la région rotative (5) du moteur d'entraînement (3) comprend, sur une extrémité tournée vers le premier tronçon (1), un arbre de moteur rotatif (7) qui est soutenu dans le premier tronçon (1) par un palier (12), en particulier par un palier à billes.

8. Pièce à main dentaire selon l'une quelconque des revendications précédentes, _{.}
**caractérisée en ce que**
l'extrémité, tournée vers le deuxième tronçon (2), de la région rotative (5) du moteur d'entraînement (3), est soutenue dans le deuxième tronçon (2) lorsque le premier tronçon (1) et le deuxième tronçon (2) sont assemblés.

9. Pièce à main dentaire selon la revendication 8,
**caractérisée en ce que**
l'extrémité, tournée vers le deuxième tronçon (2), de la région rotative (5) du moteur d'entraînement (3), est soutenue par un palier à rotor ( 13).

10. Pièce à main dentaire selon la revendication 9,
**caractérisée en ce que**
le palier à rotor (13) est fixé à la région rotative (5) du moteur d'entraînement (3).

11. Pièce à main dentaire selon la revendication 9,
**caractérisée en ce que**
le palier à rotor (13) est agencé dans le deuxième tronçon (2).

12. Pièce à main dentaire selon l'une quelconque des revendications 9 à 11,
**caractérisée en ce que**
le palier à rotor (13) est un palier à billes.

13. Pièce à main dentaire selon l'une quelconque des revendications 9 à 11,
**caractérisée en ce que**
le palier à rotor (13) est un palier à air ou un palier à glissement.

14. Pièce à main dentaire selon la revendication 9,
**caractérisée en ce que**
le palier à rotor (13) est un palier magnétique dont la partie rotative (14) est fixée à la région rotative (5) du moteur d'entraînement (3) et dont la partie statique (15) est fixée dans le deuxième tronçon (2).

15. Pièce à main dentaire selon l'une quelconque des revendications précédentes,
**caractérisée en ce que**
la région statique (9) du moteur d'entraînement (3) est agencée dans le deuxième tronçon (2) de manière interchangeable.

16. Pièce à main dentaire selon l'une quelconque des revendications précédentes,
**caractérisée en ce que**
le premier tronçon (1) présente des conduits d'alimentation (16) pour les médias d'alimentation, lesquels sont reliés directement au conduit d'amenée de médias en assemblant le premier tronçon (1) et le deuxième tronçon (2), de sorte que les médias d'alimentation peuvent être amenés directement au deuxième tronçon (1) depuis le conduit d'amenée de médias (4) raccordé au deuxième tronçon (2).

17. Pièce à main dentaire selon l'une quelconque des revendications 1 à 15,
**caractérisée en ce que**
le premier tronçon (1) et le deuxième tronçon (2) présentent des conduits d'alimentation (16) réalisés de manière correspondante pour les médias d'alimentation, lesquels sont reliés les uns aux autres par assemblage du premier tronçon (1) et du deuxième tronçon (2), les conduits d'alimentation du deuxième tronçon (2) étant en outre reliés au conduit d'amenée de médias (4) de sorte que les médias d'alimentation peuvent être amenés à l'outil dentaire depuis le conduit d'amenée de médias (4) raccordé au deuxième tronçon (2) via les conduits d'alimentation (16) du deuxième tronçon (2) et du premier tronçon (1).

18. Pièce à main dentaire selon l'une ou l'autre des revendications 16 ou 17,
**caractérisée en ce que**
les conduits d'alimentation (16) sont prévus pour les médias d'alimentation tels que le courant et/ou l'air de pulvérisation et/ou l'eau de pulvérisation et/ou l'air de refroidissement

19. Pièce à main dentaire selon l'une quelconque des revendications précédentes,
**caractérisée en ce que**
le conduit d'amenée de médias (4) est fixé directement au deuxième tronçon (2).

20. Pièce à main dentaire selon l'une quelconque des revendications précédentes,
**caractérisée en ce que**
la région statique (9) du moteur d'entraînement (3) peut être pilotée pour obtenir différentes vitesses de rotation de la région rotative (5) du moteur d'entraînement (3).

21. Pièce à main dentaire selon la revendication 20,
**caractérisée en ce que**
la région statique (9) du moteur d'entraînement (3) présente plusieurs enroulements (11) commutables séparément les uns des autres.

22. Pièce à main dentaire selon l'une quelconque des revendications précédentes,
**caractérisée en ce que**
la région rotative (5) du moteur d'entraînement (3) est directement reliée à un étage de transmission du tronçon d'instrument (1), l'étage de transmission servant à transmettre le couple de rotation de la région rotative (5) à l'outil dentaire.
